# EUROPÄISCHE PATENTSCHRIFT

(11) **EP 0 391 175 B1**
(45) Veröffentlichungstag und Bekanntmachung des Hinweises auf die Patenterteilung: **08.06.1994**
(21) Anmeldenummer: 90105568.1
(22) Anmeldetag: 23.03.1990
(51) Int. Cl.: B65G 13/06

(54) **Rollenantriebseinheit**
Roller-driving unit
Unité d'entraînement pour rouleau

(30) Priorität: 06.04.1989 DE 3911214
(43) Veröffentlichungstag der Anmeldung: 10.10.1990
(73) Patentinhaber: Telair International Cargo Systems GmbH, D-83734 Hausham (DE)
(72) Erfinder: Sundseth, Jarl, D-8104 Neuhaus (Schliersee 2) (DE)
(74) Vertreter: Bohnenberger, Johannes, Dr.

(56) Entgegenhaltungen:
- WO-A-85/00577
- US-A- 3 712 454

## Beschreibung

Die Erfindung betrifft eine Rollenantriebseinheit nach dem Oberbegriff des Patentanspruches 1.

Derartige Rollenantriebseinheiten werden beispielsweise zum Transport von Frachtbehältern verwendet, die auf Rollenförderbahnen aufgesetzt sind. Solche Frachtbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Container in den Laderaum eines Flugzeuges hineingefahren und dort verstaut werden. Die Rollenantriebseinheit ist demzufolge im Flugzeug selbst installiert.

Beim Einschalten derartiger Rollenatreibseinheiten werden die dazugehörigen Rollen hochgeschwenkt und zwar derart, daß sie sich an den Boden eines über ihnen befindlichen Frachtcontainers pressen. Durch diesen Reibschluß kann das Drehmoment der Antriebsrollen auf den Boden des Frachtcontainers übertragen werden, und die Antriebsrollen befördert diesen somit weiter.

Die Schwierigkeiten bei der Konstruktion derartiger Rollenantriebseinheiten liegen zum einem darin, daß eine möglichst hohe Anpreßkraft der Antriebsrolle an den Boden des Containers erzeugt werden muß, andererseits soll die Anpreßkraft vom Drehmoment des Motors "abgezweigt" werden und nicht durch gesonderte Mittel erzeugt werden müssen. Weiterhin muß die Antriebsrolle unabhängig von der gewünschten Beförderungsrichtung des Containers beim Anschalten des Antriebsmotors hochgeschwenkt werden und sich beim Abschalten des Motors wieder absenken. Trotz dieser verscheidenen, mechanisch nur schwer zu erfüllenden Forderungen, muß die Antriebseinheit kleinbauend und von geringem Gewicht sein, da dies für die hauptsächliche Verwendung in Luftfahrzeugen eine unabdingbare Voraussetzung ist. Da eine Vielzahl derartiger Rollenantriebseinheiten gleichzeitig in einer Förderbahn Verwendung findet, muß ihre Zuverlässigkeit besonders hoch sein. Der Ausfall bereits einer einzigen Rollenantriebseinheit kann zu einer Störung im Ladebetrieb führen.

Aus der DE-OS 37 24 126 ist eine Rollenantriebseinheit bekannt, bei welcher der Antriebsmotor in der Antriebsrolle untergebracht ist. Der Rotor des Antriebsmotors steht über ein Planetengetriebe mit einem zur Drehachse des Rotors konzentrischen Antriebszahnrad in Verbindung. Das Antriebszahnrad ist ortsfest (aber drehbar) an einem Rahmen gehalten. Die Achse des Antriebszahnrads und damit des Rotors ist außermittig zur Drehachse der hohl ausgebildeten Antreibsrolle angeordnet, die wiederum über Lager auf dem asymmetrisch ausgebildeten Stator des Elektromotors gelagert ist. Das Antriebszahnrad kämmt mit einer Innenverzahnung der Antriebsrolle und wird über eine Bremsanordnung gegenüber dem Rahmen gebremst. Beim Anschalten des Elektromotors wird die Antriebsrolle um die Achse des Antriebszahnrads bzw. des Rotors nach oben verschwenkt, bis entweder ihr Außenmantel mit einem zu befördernden Frachtcontainer in Berührung kommt, oder aber ein Anschlag zur Begrenzung dieser Verschwenkung zur Wirkung kommt. Von diesem Zeitpunkt an findet dann nur noch eine Drehbewegung der Antriebsrolle statt, da das Antriebszahnrad auf der Innenverzahnung abrollt. Diese Anordnung kann nur für relativ geringe Antriebskräfte ausgelegt werden, da der Einbauraum für den Antriebsmotor insbesondere hinsichtlich seiner Länge, die um das Getriebe vermindert wird, begrenzt ist.

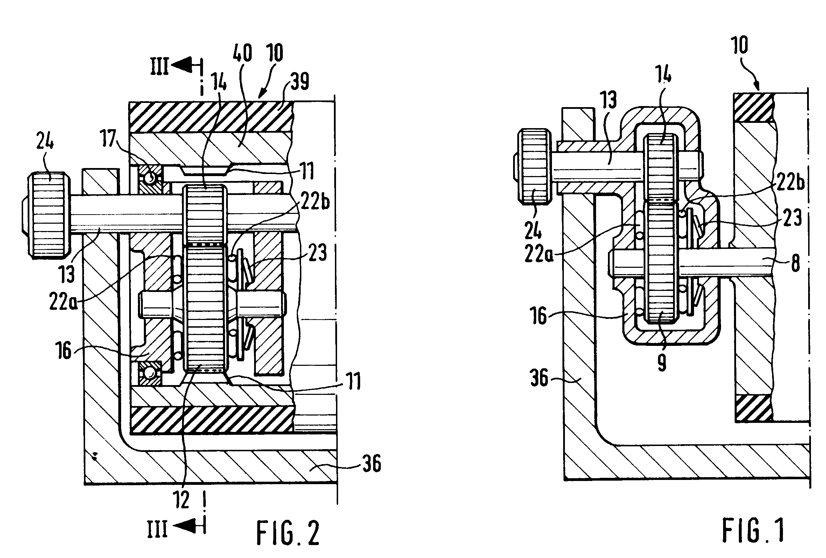

Aus der EP 0 149 658 B1 ist eine Rollenantriebseinheit der eingangs genannten Art bekannt, deren hier interessierendes Detail im folgenden anhand der Querschnittsdarstellung gemäß Figur 1 näher erläutert wird. Bei dieser bekannten Anordnung ist an einem Rahmen 36 eine Schwenkhalterung 16 um eine Antriebswelle 13 schwenkbar befestigt. Die Antriebswelle 13 weist auf der einen Seite ein Zahnrad 24 auf, das über einen nicht gezeigten Getriebezug mit einem nicht gezeigten Antriebsmotor in drehmomentübertragender Verbindung steht. Am anderen Ende der Antriebswelle 13 ist ein Antriebszahnrad 14 drehfest befestigt, das mit einem Rollenantriebszahnrad 9 kämmt, welches drehfest auf einer Rollenwelle 8 sitzt, die mit der Antriebsrolle 10 fest verbunden ist. Das Rollenantriebszahnrad 9 wird über beidseitig angebrachte Bremsen 22a, 22b mit Andruck-Federringen 23 gegenüber der Schwenkhalterung 16 gebremst. Wenn bei dieser Anordnung das Zahnrad 24 angetrieben wird, so ergibt sich durch die Bremseinrichtung 22a, 22b; 23 ein Drehmoment auf die Schwenkhalterung 16, so daß die Antriebsrolle 10 aus ihrer unteren Ruheposition (wie in Fig. 1 gezeigt) in eine obere Arbeitsposition verschwenkt wird. Bei dieser Anordnung wird es als nachteilig angesehen, daß die Einbaubreite zwangsläufig erheblich größer ist als die Breite der Antriebsrolle 10, so daß deren Oberfläche, die zur Erzielung eines hinreichend großen Reibschlusses möglichst groß geschaltet werden muß, bezogen auf die Einbaubreite gering ist.

Bei einer weiteren Ausführungsform der vorgenannten Rollenantriebseinheit sorgt eine mit einem Zapfen in Eingriff stehende Feder dafür, daß die Antriebsrolle in Richtung der Ruheposition vorgespannt ist und um einen gewissen Winkelbereich nach oben verschwenkt werden kann.

Nachteilig hierbei ist, daß keine exakte Einstellung und Begrenzung der Arbeitsposition gewährleistet werden kann. So kann die Antriebsrolle zu weit nach oben verschwenkt werden, was beim Auftreffen des zu befördernden Behälters auf die Antriebsrolle zu einer Beschädigung der Antriebseinheit führen kann.

Aus der US-PS 3,712,454 ist eine eingangs genannte Rollenantriebseinheit bekannt, deren Antriebsrolle zwischen einer Ruheposition und einer nach oben verschwenkten Betriebsposition bewegbar ist. Die Antriebsrolle umfaßt einen Innenringzahnkranz eines exzentrischen Planetengetriebes, das über ein Sonnenrad angetrieben wird. Das Innenringzahnrad ist an einer Halterung des Planetengetriebes derart exzentrisch gelagert, daß die Antriebsrolle entlang einer Umlaufbahn zwischen den beiden oben genannten Positionen bewegbar ist. Beim Betrieb wird eine Magnetspule derart beaufschlagt, daß ein Stift einer im wesentlichen U-förmigen Verriegelungseinrichtung aus einer Nut der Halterung entfernt wird, so daß diese entriegelt und beim Anlaufen eines Motors samt der Antriebsrolle um 180° bis zur Betriebsposition verschwenkt wird. In der Arbeitsposition wird die Halterung durch einen am zweiten Schenkel der U-förmigen Verriegelungseinrichtung vorgesehenen zweiten Stift verriegelt. Wird die Magnetspule nicht mehr beaufschlagt, so kehrt die Halterung und somit auch die Antriebsrolle mit umgekehrt ablaufender Schrittabfolge wieder in ihre verrastete Ruheposition zurück.

Die vorgenannte Vorrichtung weist die Nachteile auf, daß sie zum einen eine zu aufwendige und damit auch anfällige Steuerung umfaßt und zum anderen fragil ist. Da die auf den zu befördernden Behälter wirkende Vortriebskraft als Drehmoment auf die Verriegelung einwirkt, muß diese stabil ausgebildet sein.

Der Erfindung liegt die Aufgabe zugrunde, eine Rollenantriebseinheit der eingangs genannten Art dahingehend weiterzubilden, daß in einfacher Weise eine sichere Begrenzung der Schwenkbewegung über einen möglichst großen Schwenkwinkel erzielbar ist.

Diese Aufgabe wird durch die im Kennzeichen des Patentanspruches 1 angegebenen Merkmale gelöst.

Wirkungsmäßig ist zwischen dem Antriebszahnrad und dem Innenzahnkranz der Antriebsrolle ein Zwischenzahnrad angeordnet. Unter wirkungsmäßig ist hierbei zu verstehen, daß gegebenenfalls auch ein Paar von parallel geschalteten Zwischenzahnrädern vorgesehen sein kann. Durch die Anordnung der Schwenkhalterung im Inneren der Antriebsrolle ist eine Reduzierung der Baubreite der Anordnung gewährleistet.

Mittels der Anschlagflächen des Schleppkeils, der Anschlagflächen der Schwenkhalterung sowie der Anschlagflächen des Anschlagvorsprungs kann eine genaue Betriebsposition der Antriebsrolle je nach Antriebsrichtung exakt festgelegt werden. Die großflächig ausgebildeten Anschlagflächen können dabei auch hohe Kräfte aufnehmen, ohne daß die Vorrichtung beschädigt wird, so daß ein stets sicherer und dauerhafter Betrieb der Anordnung gewährleistet werden kann. Ferner werden mit der technisch äußerst einfachen und damit kostengünstigen Lösung des Schleppkeils zur Schwenkwinkelbegrenzung große Schwenkwinkel der Antriebsrolle ermöglicht.

Nach einer vorteilhaften Ausgestaltung der erfindungsgemäßen Anordnung ist die Innenverzahnung in Längsrichrung der Antriebsrolle gesehen im wesentlichen mittig in dieser angebracht.

Zum ersten Anheben der Antriebsrolle durch Schwenken beim Einschalten des Motors ist eine Bremseinrichtung vorgesehen, die vorteilhafterweise am Zwischenzahnrad ansetzt. Um beim Abschalten des Motors die Antriebsrolle wieder in die Ruheposition zurückzubringen, wirkt zum einen die Schwerkraft, zum anderen ist eine Feder vorgesehen, um die Schwenkhalterung gegenüber dem Rahmen in Richtung aur die Ruheposition der Antriebsrolle vorzuspannen bzw. mit einem entsprechenden Drehmoment zu beaufschlagen. Bei einer besonders bevorzugten Ausführungsform der Erfindung umfaßt der Getriebezug ein Planetengetriebe, dessen Sonnenrad vom Antriebsritzel des Elektromotors gebildet wird und an dessen Planetenträger der Abtrieb in Richtung auf die Antriebsrolle erfolgt. Das Hohlrad ist drehbeweglich gelagert und über ein Federelement über einen begrenzten Weg verdrehbar. Dadurch ergibt sich eine drehelastische Verbindung zwischen dem Antriebsmotor und der Antriebsrolle, die zum einen Drehmoment-Impulse reduziert, welche von einen auf die Antriebsrolle mit einer gewissen Geschwindigkeit auftreffenden zu befördernden Gegenstand aufgebracht werden, so daß diese Impulse nicht mehr direkt bis zum Elektromotor gelangen können, wodurch der Getriebezug insgesamt entlastet wird. Zum anderen wird beim Abschalten des Elektromotors das gespeicherte Drehmoment abgeben und zwar derart, daß die Antriebsrolle in Richtung auf ihre Ruheposition beaufschlagt bzw. beschleunigt wird.

Weitere vorteilhafte Merkmale ergeben sich aus den Unteransprüchen und der nachfolgenden Beschreibung bevorzugter Ausführungsformen der Erfindung, die anhand von Abbildungen näher erläutert werden. Hierbei zeigen:
- Fig. 1: eine schematisierte Längsschnittdarstellung einer herkömmlichen Anordnung;
- Fig. 2: eine schematisierte Längsschnittdarstellung einer Ausführungsform der Erfindung;
- Fig. 3: einen Schnitt entlang der Linie III-III aus Figur 2;
- Fig. 4: eine Schnittdarstellung ähnlich der nach Figur 3, jedoch mit der Antriebsrolle in ihrer hochgehobenen Antriebsposition;
- Fig. 5: eine Schemadarstellung einer weiteren Ausführungsform der Erfindung;
- Fig. 6: einen Horizontalschnitt durch eine vollständige Antriebseinheit einer weiteren bevorzugten Ausführungsform;
- Fig. 7: einen Horizontalschnitt durch eine besonders bevorzugte Ausführungsform der Erfindung,
- Fig. 8: einen Teil-Horizontalschnitt durch eine weitere Ausführungsform der Erfindung; und
- Fig. 9: eine schematisierte Seitenansicht der Anordnung nach Fig. 8.

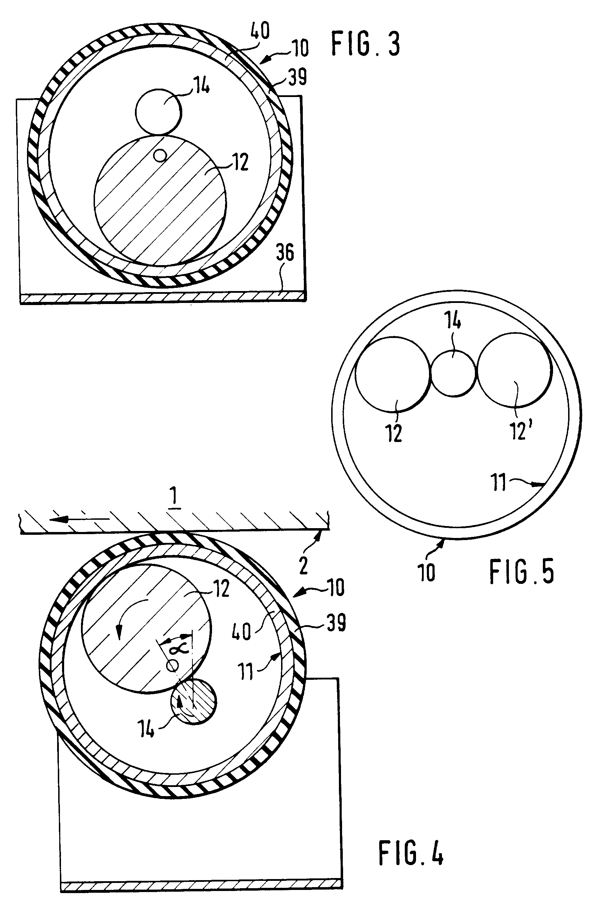

Wie aus den Figuren 2 und 3 hervorgeht, umfaßt die hier gezeigte Ausführungsform der erfindungsgemäßen Rollenantriebseinheit eine Antriebsrolle 10 mit einem Trägerkörper 40 und einem Außenmantel 39 aus einem Friktionsmaterial, z.B. aus Gummi. Der Trägerkörper 40 der Antriebsrolle 10 ist endseitig über ein Wälzlager 17 auf einer Schwenkhalterung 16 gelagert. Die Schwenkhalterung 16 wiederum ist auf einer Antriebswelle 13 gelagert, die parallel zur Symmetrieachse der Antriebsrolle 10, aber seitlich zu dieser versetzt durch die Schwenkhalterung 16 verläuft. Ein Ende der Antriebswelle 13 führt durch eine Wange eines Rahmens 36 und ist dort durch nicht gezeigte Lager (Wälzlager) gelagert. An dem über den Rahmen 36 hervorstehenden Ende ist die Antriebswelle 13 mit einem Zahnrad 24 versehen, das über einen nicht gezeigten Getriebezug mit einem nicht gezeigten Elektromotor in einer Verbindung steht, um ein Drehmoment zu übertragen.

Die Schwenkhalterung 16 ist als U-förmiger Körper ausgebildet, zwischen dessen Schenkeln einerseits ein Antriebszahnrad 14 sitzt, welches fest auf der Antriebswelle 13 aufgekeilt ist. Andererseits ist in der Schwenkhalterung 16 ein Zwischenzahnrad 12 so gelagert, daß es mit dem Antriebszahnrad 14 kämmt.

Auf beiden Seiten des Zwischenzahnrades 12 sind Bremseinrichtungen 22a bzw. 22b vorgesehen, die über ein Paar von Federringen 23 gegenüber dem Zwischenzahnrad 12 verspannt sind. Derartige Bremseinrichtungen sind aus dem eingangs zitierten Stand der Technik bekannt.

Der Trägerkörper 40 der Antriebsrolle 10 ist in Höhe (in Achsrichtung gesehen) des Zwischenzahnrades 12 mit einem Innenzahnkranz 11 versehen, der mit dem Zwischenzahnrad 12 kämmt.

Wenn der nicht gezeigte Antriebsmotor kein Drehmoment ausübt, so stillsteht, so hängt die Antriebsrolle 10 aufgrund der Schwerkraft in der in Figur 3 gezeigten Position so, daß das Zwischenzahnrad 12 unter dem Antriebszahnrad 14 liegt. Wird nun der nicht gezeigte Elektromotor so in Drehung versetzt, daß sich das Antriebszahnrad 14 in der in Figur 4 gezeigten Richtung im Uhrzeigersinn dreht, so wirkt zunächst aufgrund der Bremswirkung der Bremsanordnung 22/23 eine Kraft im Uhrzeigersinn auf die Schwenkhalterung 16, so daß die Antriebsrolle 10 im Uhrzeigersinn verschwenkt wird. Zur Begrenzung des Schwenkweges ist ein nicht bildlich dargestellter Anschlag zwischen der Schwenkhalterung 16 und dem Rahmen 36 vorgesehen. Sobald dieser Anschlag erreicht ist und die Schwenkhalterung 16 nicht mehr weiterschwenken kann, beginnt die Bremsanordnung 22/23 durchzurutschen, so daß sich die Antriebsrolle 10 entgegen dem Uhrzeigersinn dreht. Kommt nun ein zu befördernder Container 11 an, so gelangt der Außenmantel 39 mit dessen Unterfläche 2 in reibschlüssige Verbindung. Nun wird das Antriebsmoment des Antriebszahnrads 14 bzw. des nicht bezeigten Elektromotors über das Zwischenzahnrad 12 auf den Innenzahnkranz 11 und damit auf die Antriebsrolle 10 übertragen, so daß eine in Figur 4 nach links gerichtete Kraft auf den Container 11 zu dessen Beförderung ausgeübt wird. Je größer das Antriebsmoment ist, desto größer wird auch die senkrecht nach oben gerichtete Kraft zwischen der Antriebsrolle 10 und der Unterfläche 2 des Containers 1, so daß der Reibschluß und damit die Traktionswirkung steigen. Weiterhin steigt die den Reibschluß erzeugende Kraft mit sinkendem Winkel α. Dieser in Figur 4 eingezeichnete Winkel α liegt zwischen einer Geraden, die durch die Schwenkachse der Antriebsrolle 10 (die Schwenkachse entspricht der Drehachse des Antriebszahnrads 14) führt und senkrecht auf der Unterfläche 2 des Containers 1 steht und einer Geraden, die durch die Schwenkachse der Antriebsrolle 10 und deren Drehachse (in Figur 3 und 4 durch einen eingekreisten Punkt dargestellt) führt.

Anstelle des einzigen Zwischenrades 12 gemäß den Ausführungsformen nach den Figuren 2 bis 4 ist es auch möglich, ein Paar von Zwischenrädern 12, 12′ zu verwenden, wie dies in Figur 5 gezeigt ist. Auch hier ist wieder wichtig, daß die Berührungslinie zwischen Rolle und Container in Transportrichtung hinter der Schwenkachse liegt. Bei dieser Ausführungsform wird zwar die Belastung der Zahnräder bzw. der Zähne vermindert, jedoch ist die Anordnung etwas aufwendiger. Das Antriebszahnrad 14 und die Antriebsrolle 10 ist dasselbe bzw. dieselbe wie bei der zuvor gezeigten Ausführungsform.

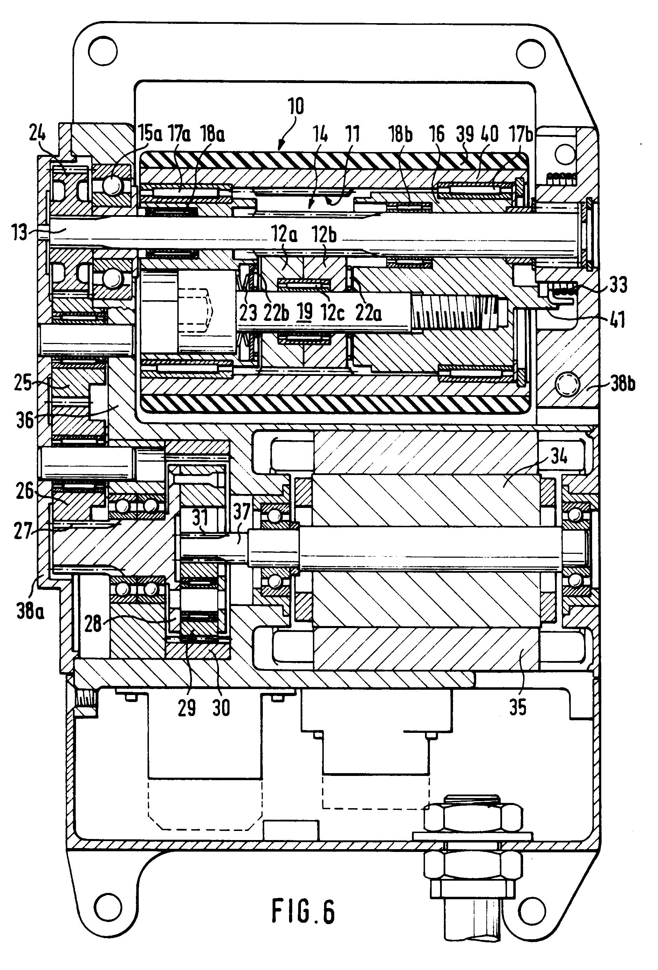

Im folgenden wird anhand von Figur 6, die einen schematischen Horizontalschnitt zeigt, eine weitere Ausführungsform der Erfindung erläutert.

Bei dieser Anordnung ist im Rahmen 36 ein Rotor 34 eines Elektromotors an beiden Enden seiner Motorwelle 37 über Wälzlager gelagert. Ein Stator 35 ist am Rahmen 36 befestigt.

An einem Ende ist die Motorwelle 37 als Zahnrad ausgebildet, das ein Sonnenrad 31 eines Planetengetriebes bildet. Das Sonnenrad 31 kämmt mit einem Planetenrad 29, das auf einem Achsstummel drehbar befestigt ist, der in einem Planetenträger 28 sitzt. Konzentrisch um das Sonnenrad 31 ist ein Hohlrad 30 in gehäusefester Verbindung angeordnet, das mit dem Planetenrad 29 kämmt.

Der Planetenträger 28 ist mit einer Welle versehen, die im Rahmen 36 über zwei Wälzlager gelagert ist. Das distale Ende der Welle ist als Getriebeausgangszahnrad 27 ausgebildet.

Das Getriebeausgangszahnrad 27 steht mit einem im Rahmen 36 gelagerten Zwischenzahnrad 26 in kämmender Verbindung, das wiederum mit einem weiteren, im Rahmen 36 gelagerten Zwischenzahnrad 25 kämmt. Die Zahnradanordnung ist durch einen Deckel 38a verschlossen, der gleichzeitig eines der Lager für die Zwischenzahnräder 25 und 26 bildet.

Das Zwischenzahnrad 25 kämmt mit dem in Figur 2 bereits erwähnten Zahnrad 24, das drehfest auf der Antriebswelle 13 sitzt. Die Antriebswelle 13 ist an ihren beiden Enden über Antriebswellenlager 15a, 15b im Rahmen 36 gelagert. In ihrem mittleren Bereich ist auf der Antriebswelie 13 das Antriebszahnrad 14 ausgebildet.

Auf der Welle 13 ist die Schwenkhalterung 16 über ein Paar von Wälzlagern 18a, 18b so gelagert, daß sie um die Antriebswelle 13 verschwenkbar ist. Die Schwenkhalterung 16 weist endseitig eine zylindrische Außenkontur auf, wobei die Symmetrieachse dieser Außenkontur asymmetrisch zur Achse durch die Antriebswelle 13 liegt. Auf diesen endseitigen zylindrischen Endabschnitten sitzen Rollenlager 17a, 17b, über welche der Trägerkörper 40 mit außenliegendem Außenmantel 39 der Antriebsrolle 10 gelagert ist.

Im Bereich des Antriebszahnrads 14 auf der Antriebswelle 13 ist am Trägerkörper 40 die Innenverzahnung 11 ausgebildet.

In der Schwenkhalterung 16 ist parallel zur Antriebswelle 13 verlaufend ein Lagerzapfen 19 (eingeschraubt) vorgesehen. Auf dem Lagerzapfen 19 ist das hier zweiteilig ausgebildete Zwischenzahnrad 12a, 12b mittels eines Zwischenzahnradlagers (Wälzlagers) 12c drehbar gelagert. Das Zwischenzahnrad 12a, 12b kämmt sowohl mit dem Antriebszahnrad 14 als auch mit der Innenverzahnung 11.

Auf jeder der beiden Seiten des Antriebszahnrads 14 ist eine Bremsanordnung 22a bzw. 22b vorgesehen, welche das Zwischenzahnrad 12a, 12b gegenüber der Schwenkhalterung 16a, 16b bremst. Zum Verspannen und dadurch zum Einstellen der Bremseinrichtungen 22a, 22b ist ein Paar von Federringen 23 vorgesehen, die von einem endseitigen Kopf des Lagerzapfens 19 gehalten werden. Je nachdem, wie weit man den Lagerzapfen 19 in die Schwenkhalterung 16a, 16b einschraubt, wird die Bremskraft vergrößert oder verringert.

Ringsum das in Figur 6 rechte Antriebswellenlager 15b ist eine konzentrische, nach innen offene Ausnehmung in einem rechten Deckel 38b vorgesehen, der auf die rechte Seite (in Figur 6) des Rahmens 36 aufgeschraubt ist. In dieser Ausnehmung ist eine Schrauben-Drehfeder 33 so eingesetzt, daß sie mit ihrem einen Ende am Deckel 38b und mit ihrem anderen Ende an der Schwenkhalterung 16 befestigt ist. Die Feder ist hierbei so angeordnet, daß sie in der Ruhestellung der Antriebsrolle 10 (siehe Figur 3) entspannt und in der Arbeitsstellung (siehe Figur 4) zur Beaufschlagung der Schwenkhalterung 16 in Richtung auf ihre Ruhestellung vorgespannt ist.

Dort, wo das eine Ende der Feder 33 mit dem Schwenklager 18 verbunden ist, bildet dieses einen, in den ringförmigen Hohlraum des Deckels 38b ragenden Anschlagzapfen 41, der je nach Drehrichtung mit einer von zwei (nicht gezeigten) Anschlagflächen im Hohlraum des Deckels 38b in Eingriff kommen kann, so daß die Schwenkbewegung der Schwenkhalterung 16 von der Ruheposition aus gesehen auf symmetrische Schwenkwinkel begrenzt ist.

Die Funktionsweise der Anordnung ergibt sich aus der obigen Beschreibung. Die hier nicht erläuterten Befestigungsmittel, wie Sprengringe und dergleichen, sind dem Fachmann geläufig.

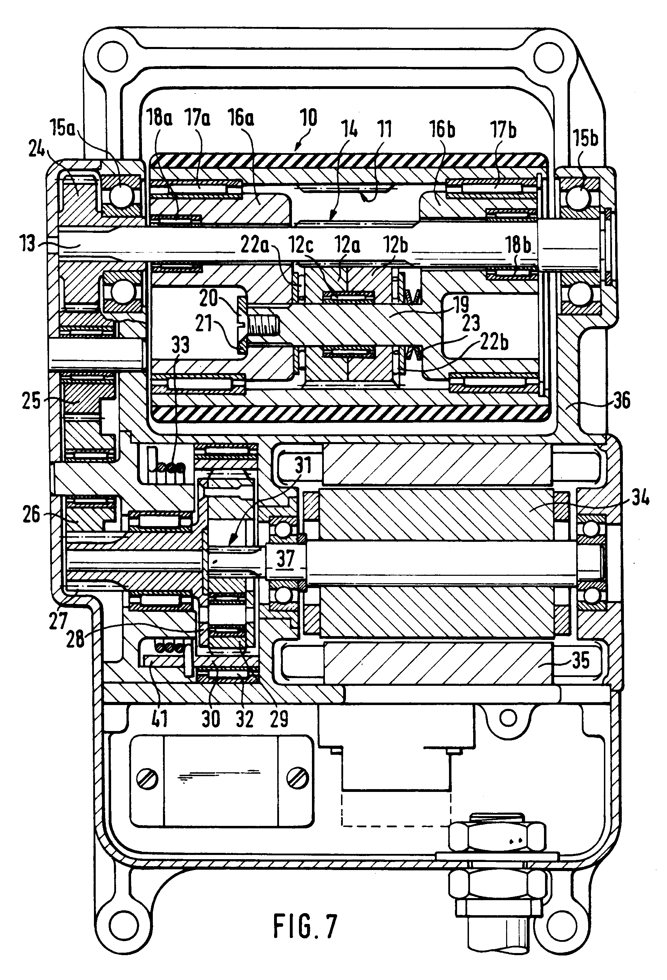

Im folgenden wird anhand von Figur 7 eine weitere Ausführungsform der Erfindung erläutert, wobei die dort gezeigten gleichwirkenden Teile dieselben Bezugsziffern tragen. Es wird bei der folgenden Beschreibung nur auf die Teile gesondert Bezug genommen, die sich von den zuvor beschriebenen Teilen wesentlich unterscheiden.

Ein erster wesentlicher Unterschied dieser Ausführungsform der Erfindung von der zuvor beschriebenen liegt darin, daß das Hohlrad 30 des Planetengetriebes drehbar über ein Hohlradlager (Wälzlager) 32 im Rahmen 37 gelagert ist. Am Hohlrad 30 greift ein Ende einer Schraubendrehfeder 33 an, die konzentrisch in einem Hohlraum rings um die Motorwelle 37 angeordnet ist. Das andere Ende der Feder 33 ist am Rahmen 36 befestigt. Das Hohlrad 30 weist weiterhin einen Anschlagzapfen 41 auf, der mit einer nicht gezeigten Anschlagfläche in dem Aufnahmehohlraum für die Feder 33 in Anschlag kommen kann. Dadurch wird der Drehweg des Hohlrads 30 begrenzt. Dieses kann selbstverständlich auch durch eine entsprechende Ausgestaltung der Feder 33 selbst erfolgen.

Durch diese Anordnung wird zum einen erreicht, daß ein auf die Antriebsrolle 10 durch Auftreffen eines in Fahrt befindlichen Behälters entstehender Drehimpuls nicht direkt, sondern nur "gedämpft", also mit einer Anstiegsflanke verringerter Steilheit, auf den Rotor 34 bzw. dessen Motorwelle 37 gelangt. Dadurch wird eine erhebliche Verringerung der Zahnflankenbelastung sämtlicher Zahnräder erzielt. Weiterhin wirkt die Feder 33 als Rückholfeder (ähnlich der in Figur 6 gezeigten Ausführungsform), wenn die Stromzufuhr zum Elektromotor abgestellt wird. In diesem Fall wirkt dann nämlich die in der Feder 33 gespeicherte Kraft über die Bremseinrichtung 22/23 im Sinne einer Beaufschlagung der Schwenkhalterung 16 in Richtung auf ihre Ruheposition. Diese Wirkung kann dadurch verstärkt werden, daß die Anschlußklemmen des Elektromotors nach dem Abschalten zumindest kurzzeitig überbrückt bzw. kurzgeschlossen werden, so daß der Rotor 34 als feststehend betrachtet werden kann. Bei einer weiteren Ausführungsform der Erfindung, die in den Abbildungen nicht gezeigt ist, wird zusätzlich die in Figur 6 gezeigte Rückholfederanordnung vorgesehen.

Die hier beschriebene weitere bevorzugte Ausführungsform unterscheidet sich von der nach Figur 6 weiterhin dadurch, daß die Schwenkhalterung 16a, 16b zweiteilig ausgeführt ist und daß die Lagerung sowohl der Schwenkhalterung 16a, 16b auf der Antriebswelle 13 als auch die Lagerung der Antriebsrolle 10 auf der Schwenkhalterung 16 exakt symmetrisch an den Stirnenden vorgenommen ist. Dadurch werden die Kippmomente in optimaler Weise aufgefangen.

Das in Figur 7 rechte Teil 16b der Schwenkhalterung ist einstückig mit dem Lagerzapfen 19 verbunden, der an seinem Ende ein konzentrisches Innengewinde aufweist. In das Innengewinde ist eine Schraube 20 einsetzbar, die einen Ring 21 in Richtung auf das Schwenkhalterungsteil 16b verschieben kann, der mit einem Außenabschnitt auf einer Anschlagsfläche im anderen (in Figur 7 linken) Schwenkhalterungsteil 16a aufliegt. Die Anordnung der Bremseinrichtungen 22a, 22b und der Federringe 23 entspricht der nach Figur 6. Bei dieser Anordnung werden durch das Spannen der Schraube 20 die beiden Schwenkhalterungsteile 16a und 16b zum Spannen der Federringe 23 und damit zum Anziehen der Bremseinrichtungen 22a, 22b aufeinander zu bewegt.

Die Wirkungsweise dieser Anordnung entspricht im übrigen derjenigen der zuvor gezeigten Anordnungen.

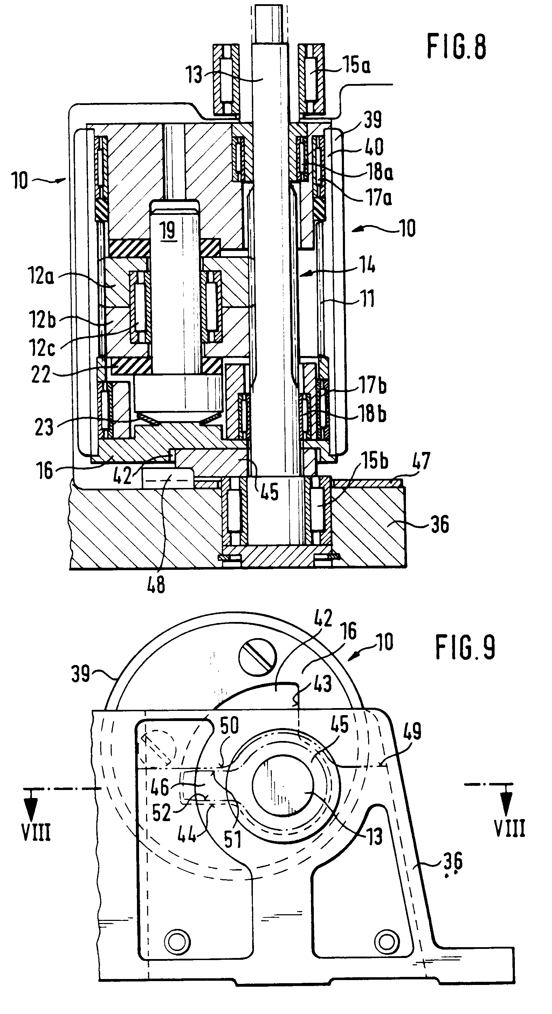

Im folgenden wird anhand der Fig. 8 und 9 eine weitere bevorzugte Ausführungsform der Erfindung beschrieben, deren konstruktiver Aufbau ähnlich dem nach Fig. 6 ist. Gleiche oder gleichwirkende Teile tragen dieselben Bezugsziffern und sind nicht nochmals einzeln erläutert.

Bei dieser bevorzugten Ausführungsform gemäß den Fig. 8 und 9 sind besondere Anschlagvorrichtungen vorgesehen, welche die Schwenkbewegung der Schwenkhalterung in die beiden oberen Arbeitspositionen begrenzen.

Diese Anschlageinrichtungen umfassen eine Ausnehmung 42 in einer Stirnfläche der Schwenkhalterung 16, welche eine Kontur ähnlich der eines Schlüsselloches aufweist. In Fig. 9 ist die Kontur der Ausnehmung 42 mit unterbrochenen Linien wiedergegeben.

Auf der gegenüberliegenden Innenfläche des Rahmens 36 ist eine Rahmenanschlagplatte 47 aufgebracht. Diese weist einen Anschlagvorsprung 48 auf, dessen Kontur in Fig. 9 mit einer strichdoppelpunktierten Linien gezeichnet ist.

In die Ausnehmung 42 eingreifend und unterhalb des Anschlagvorsprunges 48 liegend ist ein Schleppkeil 45 in wesentlichen frei drehbar auf der Antriebswelle 13 gelagert. Der Schleppkeil 45 weist eine radial (zur Welle 13) vorspringende Keilnase 46 auf. Die Keilnase 46 ist so breit ausgebildet, daß ihre erste Seitenfläche 51 und ihre zweite Seitenfläche 52 je nach Drehrichtung des Schleppkeils 45 mit einer ersten Anschlagfläche 43 oder einer zweiten Anschlagfläche 44 an der Schwenkhalterung 16 und mit einer dritten Anschlagfläche 49 bzw. einer vierten Anschlagfläche 50 am Anschlagvorsprung 48 in Eingriff kommen können.

Wird nun, wie in Fig. 9 gezeigt, die Schwenkhalterung 16 im Uhrzeigersinn verschwenkt, um die Antriebsrolle 10 nach oben zu heben, so gelangt die zweite Anschlagfläche 44 an der Schwenkhalterung 16 (in der Ausnehmung 42) mit der zweiten Seitenfläche 52 der Keilnase 46 in Eingriff und verdreht den Schleppkeil 45 ebenfalls im Uhrzeigersinn so lange, bis die erste Seitenfläche 51 der Keilnase 46 mit der vierten Anschlagfläche 50 des Anschlagvorsprunges 48 in Eingriff kommt. Beim Verschwenken der Schwenkhalterung 16 in die andere Richtung (entgegen dem Uhrzeitersinn) gelangt die erste Anschlagfläche 43 der Schwenkhalterung 16 mit der ersten Seitenfläche 51 der Keilnase 46 in Eingriff und verdreht den Schleppkeil 45, bis die zweite Seitenfläche 52 der Keilnase 46 mit der dritten Anschlagfläche 49 des Anschlagvorsprunges 48 in Eingriff gelangt.

Diese Anschlageinrichtung weist gegenüber einem einfachen Anschlagstift an der Schwenkhalterung 16, der mit entsprechenden Anschlagflächen am Rahmen 36 in Eingriff gelangen kann, den Vorteil auf, daß wesentlich höhere Kräfte aufgenommen werden können. Dies rührt daher, daß trotz des notwendigen relativ großen Schwenkwinkels sehr massiv ausgebildete Anschlagflächen vorgesehen werden können. Diese solide Ausbildung des Anschlags erhöht die Lebensdauer der Rollenantriebseinheit, da die gesamte Antriebsleistung, die beim Transport eines Containers von der Antriebsrolle auf den Container übertragen wird, dann, wenn der container die Antriebsrolle verläßt, zunächst in Form eines impulsförmigen Schlages aufgefangen werden muß. Bei hohen Antriebsleistungen sind dies gewaltige Drehmomente, welche die Schwenkhalterung 16 auf den Anschlag aufbringt.

## Patentansprüche

1. Rollenantriebseinheit mit einer Antriebsrolle (10), mit einer an einem Rahmen (36) befestigten Schwenkhalterung (16) zum drehbeweglichen Lagern der Antriebsrolle (10) derart, daß sie von einer unteren Ruheposition je nach Drehrichtung in eine von zwei oberen Arbeitspositionen verschwenkbar ist, mit einem Antriebsmotor (34, 35) zum steuerbaren Antreiben der Antriebsrolle (10), mit einem Getriebezug (24-31) zum Übertragen eines Motorantriebsmoments auf die Antriebsrolle (10), der mindestens eine zur Antriebsrolle (10) außermittige Antriebswelle (13) umfaßt, um deren Drehachse die Schwenkhalterung (16) die Antriebsrolle (10) schwenkbar hält, wobei die Antriebsrolle (10) eine Innenverzahnung (11) umfaßt, die über ein Zwischenzahnrad (12) mit einem auf der Antriebswelle (13) sitzenden Antriebszahnrad (14) in drehfester Verbindung steht, und wobei eine Anschlageinrichtung (42-50) zwischen der Schwenkhalterung (16) und dem Rahmen (36) vorgesehen ist, welche Anschlagflächen (43, 44) an der Schwenkhalterung (16) sowie Anschlagflächen (49, 50) am Rahmen (36) umfaßt,
**dadurch gekennzeichnet,**
daß an der Schwenkhalterung (16) eine erste und eine zweite Anschlagfläche (43, 44) und am Rahmen (36) eine dritte und eine vierte Anschlagfläche (49, 50) vorgesehen sind, und daß ein Schleppkeil (45) vorgesehen ist, der im wesentlichen frei um die Antriebswelle (13) gelagert ist, der eine Keilnase (46) mit einer ersten und einer zweiten Seitenfläche (51, 52) aufweist und so ausgebildet ist, daß beim Verschwenken der Schwenkhalterung (16) in die eine der oberen Arbeitspositionen die zweite Seitenfläche (52) der Keilnase (46) mit der zweiten Anschlagfläche (44) und die erste Seitenfläche (51) der Keilnase (46) mit der vierten Anschlagfläche (50) in Eingriff gelangt und beim Verschwenken der Schwenkhalterung (16) in die andere der oberen Arbeitspositionen die zweite Seitenfläche (52) der Keilnase (46) mit der dritten Anschlagfläche (49) und die erste Seitenfläche (51) der Keilnase (46) mit der ersten Anschlagfläche (43) in Eingriff gelangt.

2. Rollenantriebseinheit nach Anspruch 1,
**dadurch gekennzeichnet,**
daß die Schwenkhalterung (16) innerhalb der Antriebsrolle (10) angeordnet ist.

3. Rollenantriebseinheit nach einem der vorhergehenden Ansprüche,
**dadurch gekennzeichnet,**
daß die Innenverzahnung (11) in Längsrichtung der Antriebsrolle (10) im wesentlichen mittig in dieser angeordnet ist.

4. Rollenantriebseinheit nach Anspruch 2,
**dadurch gekennzeichnet,**
daß die Schwenkhalterung (16) zwei endseitige Lager (17a, 17b) aufweist, auf denen die Antriebsrolle (10) mit stirnseitigen Enden gelagert ist.

5. Rollenantriebseinheit nach einem der vorhergehenden Ansprüche,
**dadurch gekennzeichnet,**
daß das Zwischenzahnrad (12) mit einer Bremseinrichtung (22a, 22b; 23) zum Abbremsen gegenüber der Schwenkhalterung (16) versehen ist.

6. Rollenantriebseinheit nach einem der vorhergehenden Ansprüche,
**dadurch gekennzeichnet,**
daß die Schwenkhalterung (16) über eine Feder (13) gegenüber dem Rahmen (36) in Richtung auf die Ruheposition der Antriebsrolle (10) spannbar ist.

7. Rollenantriebseinheit nach einem der vorhergehenden Ansprüche,
**dadurch gekennzeichnet,**
daß der Getriebezug ein Planetengetriebe (28-31) umfaßt, das als An- oder Abtriebselemente ein Hohlrad (30), ein Sonnenrad (31) und einen Planetenradträger (28) mit darauf drehbar befestigten Planetenrädern (29) umfaßt, und daß eines der drei An- oder Abtriebselemente (28, 30, 31) entgegen der Kraft eines Federelementes (33) drehelastisch gelagert ist.

8. Rollenantriebseinheit nach Anspruch 7,
**dadurch gekennzeichnet,**
daß das Hohlrad (30) im Rahmen (36) gelagert (Lager 32) ist und mit dem einen Ende einer Schrauben-Drehfeder (33) verbunden ist, deren anderes Ende am Rahmen (36) befestigt ist.

9. Rollenantriebseinheit nach einem der vorhergehenden Ansprüche,
**dadurch gekennzeichnet,**
daß die Schwenkhalterung (16a, 16b) zweiteilig ausgebildet ist, wobei die beiden Teile (16a, 16b) über einen Lagerzapfen (19) zum Lagern des Zwischenzahnrads (12) verbunden sind.

10. Rollenantriebseinheit nach Anspruch 9,
**dadurch gekennzeichnet,**
daß auf beiden Stirnflächen des Zwischenzahnrads (12) Bremseinrichtungen (22a, 22b; 23) angeordnet sind, die jeweils einerseits mit dem Zwischenzahnrad (12) und andererseits mit jeweils einem Teil der Schwenklagerung (16a bzw. 16b) in Verbindung stehen.

## Claims

1. Roller-driving unit, having a driving roller (10), having a swivel mounting (16) fastened to a frame (36) for rotatably supporting the driving roller (10) in such a way that it may be swivelled from a bottom position of rest into one of two top working positions depending on the direction of rotation, having a drive motor (34, 35) for controllably driving the driving roller (10), having a gear train (24-31) for transmitting a motor input torque to the driving roller (10), which gear train comprises at least one drive shaft (13) which is eccentric to the driving roller (10), the swivel mounting (16) holding the driving roller (10) so that the latter may swivel about the axis of rotation of said drive shaft (13), the driving roller (10) comprising an internal gear (11) which is non-rotatably connected via an intermediate gear wheel (12) to a driving gear wheel (14) seated on the drive shaft (13), and there being provided between the swivel mounting (16) and the frame (36) a stop device (42-50) which comprises stop faces (43, 44) on the swivel mounting (16) as well as stop faces (49, 50) on the frame (36),
characterized in that
a first and a second stop face (43, 44) are provided on the swivel mounting (16) and a third and a fourth stop face (49, 50) are provided on the frame (36), and that a drag key (45) is provided, which is supported substantially freely about the drive shaft (13), has a key head (46) with a first and a second side face (51, 52) and is so constructed that, on swivelling of the swivel mounting (16) into one of the top working positions, the second side face (52) of the key head (46) comes into engagement with the second stop face (44) and the first side face (51) of the key head (46) comes into engagement with fourth stop face (50) and, on swivelling of the swivel mounting (16) into the other top working position, the second side face (52) of the key head (46) comes into engagement with the third stop face (49) and the first side face (51) of the key head (46) comes into engagement with the first stop face (43).

2. Roller-driving unit according to claim 1,
characterized in that
the swivel mounting (16) is disposed inside the driving roller (10).

3. Roller-driving unit according to one of the preceding claims,
characterized in that
the internal gear (11) is disposed substantially centrally in the driving roller (10) in terms of the latter's longitudinal direction.

4. Roller-driving unit according to claim 2,
characterized in that
the swivel mounting (16) has two end-side bearings (17a, 17b), on which the driving roller (10) is supported by its front ends.

5. Roller-driving unit according to one of the preceding claims,
characterized in that
the intermediate gear wheel (12) is provided with a braking device (22a, 22b; 23) for its deceleration relative to the swivel mounting (16).

6. Roller-driving unit according to one of the preceding claims,
characterized in that
the swivel mounting (16) may be tensioned by a spring (33) opposite the frame (36) in the direction of the position of rest of the driving roller (10).

7. Roller-driving unit according to one of the preceding claims,
characterized in that
the gear train comprises a planetary gearing (28-31) which, as drive or output elements, comprises a ring gear (30), a sun wheel (31) and a planet carrier (28) having planet wheels (29) rotatably fastened thereon, and that one of the three drive or output elements (28, 30, 31) is supported in a torsionally flexible manner against the action of a spring element (33).

8. Roller-driving unit according to claim 7,
characterized in that
the ring gear (30) is supported (bearing 32) in the frame (36) and is connected to one end of a helical torsion spring (33), the other end of which is fastened to the frame (36).

9. Roller-driving unit according to one of the preceding claims,
characterized in that
the swivel mounting (16a, 16b) is of a two-part construction, the two parts (16a, 16b) being connected by a bearing journal (19) for supporting the intermediate gear wheel (12).

10. Roller-driving unit according to claim 9,
characterized in that
disposed on both faces of the intermediate gear wheel (12) are braking devices (22a, 22b; 23) which are each connected on the one hand to the intermediate gear wheel (12) and on the other hand to a respective part of the swivel mounting (16a or 16b).

## Revendications

1. Unité d'entraînement pour rouleau avec un rouleau d'entraînement (10), avec un support pivotant (16), fixé sur un châssis (36), pour le supportage rotatif du rouleau d'entraînement (10), de sorte que ce dernier peut pivoter d'une position de repos inférieure, suivant le sens de rotation, dans l'une de deux positions de travail supérieures, avec un moteur de commande (34, 35) pour l'entraînement du rouleau (10), avec un train d'engrenages (24 - 31), prévu pour transmettre un couple d'entraînement du moteur au rouleau d'entraînement (10), et comportant un arbre moteur (13), au moins, autour de l'axe de rotation duquel le support pivotant (16) maintient le rouleau d'entraînement (10) avec une possibilité de pivotement, le rouleau d'entraînement (10) présentant une denture intérieure (11), solidaire en rotation, par l'intermédiaire d'une roue dentée intermédiaire (12), d'une roue dentée motrice (14) logée sur l'arbre moteur (13), et un dispositif de butée (42 - 50) étant prévu entre le support pivotant (16) et le châssis (36), et comportant des surfaces de butée (43, 44) sur le support pivotant (16), et des surfaces de butée (49, 50) sur le châssis (36), caractérisée en ce qu'une première et une deuxième surfaces de butée (43, 44) sont prévues sur le support pivotant (16), une troisième et une quatrième surfaces de butée (49, 50) étant prévues sur le châssis (36), et en ce qu'une clavette d'entraînement (45), montée d'une manière essentiellement libre autour de l'arbre moteur (13), présente un talon de clavette (46) avec une première et une seconde surfaces latérales (51, 52), et a une réalisation telle que, lors du pivotement du support pivotant (16) dans l'une des positions de travail supérieures, la seconde surface latérale (52) du talon (46) entre en prise avec la deuxième surface de butée (44), la première surface latérale (51) du talon (46) entrant en prise avec la quatrième surface de butée (50), et que, lors du pivotement du support pivotant (16) dans l'autre position de travail supérieure, la seconde surface latérale (52) du talon (46) entre en prise avec la troisième surface de butée (49), la première surface latérale (51) du talon (46) entrant en prise avec la première surface de butée (43).

2. Unité d'entraînement pour rouleau suivant la revendication 1, caractérisée en ce que le support pivotant (16) est disposé à l'intérieur du rouleau d'entraînement (10).

3. Unité d'entraînement pour rouleau suivant l'une quelconque des revendications précédentes, caractérisée en ce que la denture intérieure (11) est essentiellement disposée, dans le sens longitudinal du rouleau d'entraînement (10), au centre de ce dernier.

4. Unité d'entraînement pour rouleau suivant la revendication 2, caractérisée en ce que le support pivotant (16) présente deux paliers (17a, 17b) côté extrême, sur lesquels est logé le rouleau d'entraînement (10) par des extrémités côté frontal.

5. Unité d'entraînement pour rouleau suivant l'une quelconque des revendications précédentes, caractérisée en ce que la roue dentée intermédiaire (12) est munie d'un dispositif de freinage (22a, 22b; 23) par rapport au support pivotant (16).

6. Unité d'entraînement pour rouleau suivant l'une quelconque des revendications précédentes, caractérisée en ce que le support pivotant (16) peut être tendu, par l'intermédiaire d'un ressort (13), par rapport au châssis (36), en direction de la position de repos du rouleau d'entraînement (10).

7. Unité d'entraînement pour rouleau suivant l une quelconque des revendications précédentes, caractérisée en ce que le train d'engrenages présente un engrenage planétaire (28 - 31) qui comporte, comme éléments moteurs ou menés, une couronne (30), une roue solaire (31) et un porte-satellites (28), sur lequel sont fixées des roues satellites (29) avec une possibilité de rotation, et en ce que l'un des trois éléments moteurs ou menés (28, 30, 31) présente un montage élastique à torsion contre la force d'un élément de ressort (33).

8. Unité d'entraînement pour rouleau suivant la revendication 7, caractérisée en ce que la couronne (30) est logée dans le châssis (36) (palier 32), et est assemblée avec une extrémité d'un ressort de torsion hélicoïdal (33), dont l'autre extrémité est fixée sur le châssis (36).

9. Unité d'entraînement pour rouleau suivant l'une quelconque des revendications précédentes, caractérisée en ce que le support pivotant (16a, 16b) est réalisé en deux parties, les deux parties (16a, 16b) étant assemblées par l'intermédiaire d'un tourillon (19) pour le supportage de la roue dentée intermédiaire (12).

10. Unité d'entraînement pour rouleau suivant la revendication 9, caractérisée en ce que des dispositifs de freinage (22a, 22b; 23) sont disposés sur deux faces frontales de la roue dentée intermédiaire (12), ces dispositifs étant respectivement reliés à la roue dentée intermédiaire (12), d une part, à une partie du support pivotant (16a et/ou 16b), d'autre part.
